# EUROPÄISCHE PATENTANMELDUNG

(11) **EP 1 870 627 A2**
(43) Veröffentlichungstag der Anmeldung: **26.12.2007**
(21) Anmeldenummer: 07110152.1
(22) Anmeldetag: 13.06.2007
(51) Int. Cl.: F16L 59/02

(54) **Isolierung**

(30) Priorität: 21.06.2006 DE 202006009673 U
(71) Anmelder: Etis AG, 9100 Herisau (CH)
(72) Erfinder: Wirth, Anton ETIS AG, 9056 Gais (CH)
(74) Vertreter: Stocker, Kurt

(57) **Zusammenfassung**

Eine Isolierung zum Anbringen an Gehäuseteilen (2) ist zusammengestellt aus Isolierelementen (3) mit einer Hülle, die eine Innenhaut (4), eine Aussenhaut (5) sowie diese verbindende Verbindungsflächen (6) umfasst, und mit in der Hülle angeordnetem Isoliermaterial (7). In der Hülle sind an die Aussenhaut (5) anschliessend Innenteile (18) von Befestigungselementen (8, 8a) angeordnet. Die Befestigungselemente (8) werden mit Verbindungselementen (10) an den Gehäuseteilen (2) montiert. Die Befestigungselemente (8) umfassen einen Vorstehteil (16) mit einer Anschlagfläche (17) und den Innenteil (18) mit einem Haltebereich (19). Die Anschlagflächen (17) der Befestigungselemente (8) stehen durch Durchtrittsöffnungen (5a) über die Aussenhaut (5) des Isolierelementes (3) vor. Im montierten Zustand wirkt die Anpresskraft zwischen dem Gehäuseteil (1) und den Anschlagflächen (17) und die Haltebereiche (19) liegen innen an die Aussenhaut (5) an. Mit dieser Befestigung erzielen die Isolierelemente (3) dauerhaft gute thermische und/oder akustische Isolationseigenschaften auch bei starken Vibrationen und hohen Temperaturen.

## Beschreibung

Die Erfindung bezieht sich auf eine Isolierung nach dem Oberbegriff des Anspruches 1. Isolierungen mit solchen Isolierelementen werden als Innenisolierungen beispielsweise zum thermischen und/oder akustischen Isolieren von Verbren-nungsmotoren, insbesondere deren Auspuffleitungen, Turboladern, Katalysatoren und Schalldämpfern, sowie Gas- und Dampfturbinen benötigt. Sie können allgemein an Gehäuseteilen, insbesondere an Innenflächen von Gehäusen oder gegebenenfalls auch lediglich an Tragkonstruktionen befestigt werden. Die montierten Isolierelemente umschliessen Schall und/oder Hitze erzeugende Geräte oder Anlagenteile zumindest teilweise.

Bei grossen Schiffsmotoren oder bei stationären Motoren werden zur Auspuff- und Turboladerisolierung so genannte Kassettenisolierung eingesetzt, welche Isolierkissen umfassen, deren Hüllen aus Glasfaserstoff bestehen und die mit Isoliermatten gefüllt sind. In der WO 97/48943 A1 wird eine verbesserte thermische und akustische Isolierung für Maschinenkomponenten mit starken mechanischen Schwingungen und hohen Temperaturen beschrieben. Sie besteht aus halbschalenförmigen Isolierelementen, die räumlich so ausgebildet sind, dass sie exakt den Konturen des zu isolierenden Körpers folgen. Diese Formgebung ist sehr aufwändig.

Die Schrift WO2005/083315 A1 beschreibt Isolierelemente, die direkt an Aussenflächen von Bauteilen montiert werden. Um das Eindringen von Öl zu verhindern umfasst die Aussenhaut dieser Isolierelemente eine betriebsbeständige Schottschicht. Aus der EP 1 097 338 B1 ist ein weiteres Isoliersystem mit direkt an den heissen Teilen anliegenden Isolierelementen bekannt. Diese Isolierelemente haben den Nachteil, dass sie für das direkte Montieren am Bauteil ausgelegt sind und daher eine Befestigung an Gehäuseflächen nicht vorgesehen ist.

Die aus der WO 00/36239 A1 bekannten Isolierelemente umfassen Hüllen mit darin angeordnetem Fasermaterial. Zusätzlich zum Fasermaterial wird auch festes Flachmaterial in die Hülle eingesetzt. Die Isolierelemente werden nicht an Innenflächen von Gehäusen montiert, sondern miteinander zu einem Isoliergehäuse verbunden. Gegebenenfalls werden sie um ein Haltegestell aufgebaut. Die Isolierelemente werden mittels Klettverbindungen miteinander verbunden, was zumindest bei hohen Temperaturen und Vibrationen nicht geeignet ist. Es ist keine Befestigung an Gehäuseinnenflächen beschrieben.

Aus der DE 102 30 294 A1 ist ein Schalldämmelement mit einer von einer Hülle umschlossenen Fasermatte bekannt. Die Hülle besteht aus Kunststoff-Flachmaterial, wobei die am Gehäuse zu befestigende Rückseite der Hülle von einer Trägerschicht mit erhöhter Stabilität gebildet wird. Zur Befestigung der Schalldämmelemente an einer Gehäuseinnenfläche sind Klettverbindungen und/oder Bohrungen in einem seitlich vorstehenden Randbereich der Trägerschicht vorgesehen. Bei Anwendungen mit hohen Temperaturen und/oder Vibrationen sind die Klettverbindungen nicht geeignet. Die vorstehenden Randbereiche der Trägerschicht führen bei aneinander anschliessenden Elementen zu Teilbereichen ohne isolierende Faserschicht, was bei hohen Ansprüchen an die Wärme- und Schallisolation unerwünscht ist. Gemäss der der DE 102 30 294 A1 wird eine einfache Herstellung erzielt, indem die Hüllenteile mittels Schweissen oder Klebstoff miteinander verbunden werden. Der Klebstoff bzw. die schweissbaren Hüllenteile sind nicht geeignet für Anwendungen mit hohen Temperaturen.

Aus der EP 448 576 B1 ist eine Isolierung bekannt, bei der vom heissen Bauteil Bolzen vorstehen, an denen metallische Distanzhalter befestigt sind. Die Distanzhalter tragen eine äussere Isolationsschicht. Die Bolzen und die daran anschliessenden Distanzhalter bilden Wärme- und Schallbrücken. Die äusseren Enden der Distanzhalter können äusserst hohe Temperaturen aufweisen, was bei einer Brennstoff enthaltenden Umgebung mit einer Explosionsgefahr verbunden ist. Bei Bauteilen mit starken Vibrationen werden die Verbindungen zwischen den Distanzhaltern und der Isolationsschicht mechanisch stark belastet, was zu einer vorzeitigen Zerstörung führen kann.

In der DE 196 31 291 ist eine Innenisolierung für Heissgaskanäle beschrieben. Dabei stehen von einem äusseren Gehäuse mit Versteifungsblechen mehrgliedrige Distanzkörper nach innen vor. Am inneren Ende sind die Distanzkörper mit u-förmigen Tragschienen verbunden. Zwischen den u-förmigen Tragschienen und inneren Auflageflächen der Distanzkörper sind innerer Leitbleche gehalten. Das Isoliermaterial ist zwischen dem äusseren Gehäuse und den inneren Leitblechen angeordnet. Obwohl bei den Schraubverbindungen der mehrgliedrigen Distanzkörper Keramikunterlegscheiben eingesetzt sind, gibt es vom äusseren Gehäuse zu den inneren Tragschienen metallische Verbindungen, die Wärme- und Schallbrücken bilden. Daher kann dieser Aufbau nicht eingesetzt werden, wenn im Innern des isolierten Gehäuses hohen Temperaturen und/oder Vibrationen auftreten. Zudem würden bei starken Vibrationen die Keramikunterlegscheiben zerstört, was zu einer weiteren Erhöhung der Wärmeleitung durch die Distanzkörper führen würde. Ein weiterer Nachteil der Lösungen mit mehrgliedrigen Distanzkörpern besteht darin, dass sehr viele Distanzhalter eingesetzt werden müssen und somit der Aufwand zum Einsetzen entsprechend gross ist. Die Schalldämpfung des beschriebenen Isolationsaufbaus ist für viele Anwendungen zu schwach.

US 4 057 123 beschreibt leichte Schalldämmelemente mit einem Rahmen, der an beiden grossen Seitenflächen eine Abschlussfläche aus Schichtmaterial trägt. An der gegen den Innenraum gerichteten Abschlussfläche ist nach innen vorstehend Schalldämmmaterial angeordnet. Die Abschlussflächen und das Schalldämmmaterial sind mit Klammern am Rahmen befestigt. An der gegen die Wand gerichteten Abschlussfläche sind Haken befestigt. Zur Montage des Schalldämmelementes werden die Haken an Tragelementen eingehängt, die von der Wand vorstehen. Bei starken Vibrationen kann diese Isolierung nicht eingesetzt werden, weil die Haken nur mit einem Steckstift an der Abschlussfläche befestigt und an den Tragelementen nur eingehängt sind. Der Rahmen bildet eine Wärmebrücke, die für den Einsatz bei hohen Temperaturen nicht zulässig ist.

Aus der WO 2005/102782 A1 sind Isolierelementen bekannt mit einer Hülle, die eine Innenhaut, eine Aussenhaut, diese verbindende Verbindungsflächen und in der Hülle Isoliermaterial umfasst, wobei die Aussenhaut im montierten Zustand an den Gehäuseteilen anliegt. In der Hülle sind Befestigungselemente mit Gewinden angeordnet. Zum Befestigen werden durch Löcher in den Gehäuseteilen von aussen Schrauben in die Befestigungselemente eingeschraubt. Zwischen den Befestigungselementen und den Gehäuseteilen ist die Aussenhaut eingeklemmt. Bei starken Vibrationen besteht nun die Gefahr, dass die Aussenhaut bei diesen Klemmstellen zu reissen beginnt, oder dass sich die Schrauben lösen.

Die Aufgabe der vorliegenden Erfindung besteht nun darin, eine Isolierung zu finden, die Wärme- und/oder Schallbrücken möglichst vermeidet und einfach aufgebaut sowie betriebsbeständig ist. Mit den an Gehäuseteilen montierten Isolierelementen sollen dauerhaft gute thermische und/oder akustische Isolationseigenschaften erzielt werden, auch bei starken Vibrationen.

Diese Aufgabe wird durch die Merkmale des Anspruches 1 gelöst. Die abhängigen Ansprüche beschreiben bevorzugte bzw. alternative Ausführungsformen.

Ausgehend von Isolierelementen gemäss der der WO 2005/102782 A1 mit darin angeordneten Befestigungselementen wurde in einem erfinderischen Schritt erkannt, dass die Aussenhaut der Isolierelemente von den Befestigungselementen nicht festgeklemmt werden darf, weil flexible Hüllen eine gewisse Elastizität aufweisen. Wenn sich im Verbindungsbereich zwischen dem Befestigungselement und dem Gehäuseteil Rümpfe oder andere Unregelmässigkeiten der Schichtdicke der Aussenhaut bilden, kann die Klemmkraft auf enge Stellen beschränkt sein, so dass bei starken Vibrationen um diese Stelle grosse Kräfte auftreten und die Aussenhaut zu Rissen neigt. Die Elastizität der Aussenhaut, insbesondere bei mehrschichtig aufgebauten Aussenhäuten, kann bei starken Vibrationen auch zu einer Reduktion der Mächtigkeit der Aussenhaut und damit zu einem Freiraum zwischen Gehäuseteil und Isolierelement führen. Ein solcher Freiraum führt zu einem Spiel zwischen dem Gehäuseteil und dem Isolierelement, was bei Vibrationen grosse Beschleunigungskräfte an den Schrauben erzeugt. Mit der Zeit können sich Verschraubungen lösen und/oder Ermüdungsbrüche bei den Schrauben auftreten.

Die erfinderischen Isolierelemente umfassen Befestigungselemente bestehend aus einem Vorstehteil mit einer Anschlagfläche und einem Innenteil, der im Innern des Isolierelements aufgenommen ist. Die Anschlagfläche eines Befestigungselementes steht durch eine Durchtrittsöffnung soweit über die Aussenhaut des Isolierelementes vor, dass nach dem Montieren des Isolierelementes an einem Gehäuseteil die gesamte Anpresskraft zwischen dem Gehäuseteil und der Anschlagfläche wirkt. Dadurch kann ein Festklemmen der Aussenhaut ausgeschlossen werden. Der Innenteil des Befestigungselementes liegt mit einem Haltebereich innen an der Aussenhaut an. Zum Montieren umfasst das Befestigungselement mindestens eine Bohrung, die von der Anschlagsfläche ins Befestigungselement führt und in der ein vom Gehäuseteil vorstehendes Verbindungselement festgesetzt werden kann.

Ein weiterer Vorteil besteht darin, dass die Anschlagsfläche auch weiter über die Aussenhaut des Isolierelementes vorstehen kann, als dies zum Verhindern des Festklemmens nötig ist. Mit der Wahl eines Abstands zwischen der Anschlagsfläche und der Aussenhaut kann das Isolierelement so an einer Gehäuseinnenfläche montiert werden, dass zwischen der Aussenhaut und der Gehäuseinnenfläche der gewählte Abstand eingehalten wird.

Für Isolierelemente mit einer Aussenhaut, die mindestens eine Lage aus metallischem Material umfasst, sind gemäss einer bevorzugten Ausführungsform die Befestigungselemente über Schweissverbindungen mit der metallischen Lage verbunden. Die metallische Lage ist beispielsweise als Metallfolie, Metallblech, Drahtgitter oder Drahtgewebe ausgebildet und umfasst bei den Befestigungselementen Durchtrittsöffnungen. Die Befestigungselemente werden bei einem Haltebereich mit einer Lage der Aussenhaut verbunden. Es kann für jedes Verbindungselement ein kleines Befestigungselement festgesetzt werden. Durch die genaue Anordnung der Durchtrittsöffnungen ist auch eine genaue Anordnung der daran festgesetzten Befestigungselemente gewährleistet. Auf ausgedehnte Befestigungselemente mit mehreren Bohrungen kann verzichtet werden.

Wenn die Befestigungselemente an einer metallischen Lage fest geschweisst werden, handelt es sich um metallische Befestigungselemente, die in der Bohrung ein Befestigungsgewinde umfassen können. Die Verbindungselemente können in der Form von Schrauben an diesen Befestigungsgewinden mit einem hohen Drehmoment festgeschraubt werden. Da bereits kurze Befestigungsgewinde genügen, kann der Innenteil mit einer kurzen Ausdehnung in Richtung der Gewindeachse ausgebildet werden. Zwischen dem inneren Ende des Innenteils und der Innenhaut des Isolierelementes bleibt eine genügend dicke Schicht aus Isoliermaterial. Die Befestigungselemente bilden daher keine durchgehenden Wärme- und Schallbrücken.

Eine benötigte Formstabilität der Isolierelemente kann durch einen geeigneten Aufbau der Hülle und durch das darin angeordnete Isoliermaterial gewährleistet werden. Die Hülle eines Isolierelementes besteht grundsätzlich aus einer dem Gehäuseteil, bzw. der Gehäuseinnenfläche, zugewandten Aussenhaut und einer Innenhaut, die dem Innenraum des Gehäuses zugewandt ist. Zwischen der Innenhaut und der Aussenhaut wird Isoliermaterial angeordnet. Damit dieses Isoliermaterial vollständig umschlossen ist, sind Verbindungsflächen von der Innenhaut zur Aussenhaut ausgebildet. Diese Verbindungsflächen bilden Stirnseiten oder Längsseiten der Isolierelemente. Um eine Fläche vollständig zu isolieren, werden Isolierelemente mit den Verbindungsflächen in gegenseitigen Kontakt gebracht. Die Verbindungsflächen erstrecken sich quer, insbesondere senkrecht, zu den angrenzenden Bereichen der Innen- und der Aussenhaut.

Gegebenenfalls sind zumindest einzelne Verbindungsflächen abgestuft oder mit Vertiefungen (Nut) bzw. Vorsprüngen (Feder) ausgebildet, so dass aneinander anschliessende Isolierelemente ohne direkte Durchtrittsspalte aneinander anliegen. Dazu weisen die aneinander anliegenden Verbindungsflächen je entsprechende Dichtungsformen auf. Der Aufbau der Innenhaut und der Aussenhaut sowie das verwendete Isoliermaterial sind an die jeweilige Dämmaufgabe angepasst.

Bei Systemen mit starken Vibrationen und hohen Temperaturen werden sehr widerstandsfähige Isolierelemente eingesetzt. Bei diesen ist zumindest eine Schicht der Aussenhaut aus metallischem Material gebildet. Gegebenenfalls umfasst die Aussenhaut ein Drahtgitter, insbesondere ein Drahtgewebe, vorzugsweise aber eine Metallfolie und/oder ein Blech.

Die Innenhaut und die Verbindungsflächen umfassen vorzugsweise ein Drahtgitter bzw. ein Drahtgewebe, wobei die Innenhaut und die Verbindungsflächen insbesondere aus einem zusammenhängenden Stück gebildet werden, so dass auf eine Verbindung von Teilen verzichtet werden kann. Nach dem Einlegen des Isoliermaterials in den von der Innenhaut und den Verbindungsflächen gebildeten Aufnahmebereich werden die Verbindungsflächen mit einer metallischen Lage der Aussenhaut verschweisst. Die Schweissung befindet sich dabei vorzugsweise im Bereich der Verbindungsflächen.

Das Isoliermaterial kann gegebenenfalls in der Form von losen Fasern, oder insbesondere von Partikeln, in faserdichte bzw. partikeldichte Hüllen eingefüllt werden. Dabei soll die Form des Isolierelementes durch die Formstabilität der Hülle, bzw. der Innenhaut, Aussenhaut und der Verbindungsflächen erzielt werden. Bei der Verwendung von Fasermatten trägt die Formstabilität der Matte zur Formstabilität der Isolierelemente bei. Die bevorzugten Fasermatten bestehen beispielsweise aus langen Fasern und sind bei Vibrationen bezüglich des Freisetzens von Einzelfasern sehr beständig. Insbesondere sind die Fasern ohne Bindemittel zu einer filzähnlichen Matte verfilzt.

Bei Ausführungsformen mit schichtförmigem Isoliermaterial wird bevorzugt eine Fasermatte verwendet, die unter dem Namen Superwool® im Handel ist und aufgrund der Klassifikationstemperatur von 1050°C bis zu Temperaturen von 1000°C eingesetzt werden kann. Diese Matte besteht aus Erdalkali-Silikat-Fasern und ist gesundheitlich unbedenklich, weil sich die Fasern durch bzw. in Körperflüssigkeiten auflösen. Dies ist ein Vorteil gegenüber den handelsüblichen Keramik-Fasermatten, die gegebenenfalls die Gesundheit gefährden. Die Silikat-Fasermatte zeichnet sich auch im Dauereinsatz bei hohen Temperaturen durch eine geringe Wärmeleitfähigkeit, eine geringe Schwindung und eine hohe Vibrationsbeständigkeit aus. Die zu verwendende Schichtdicke hängt vom Temperaturbereich der zu isolierenden Innenräume bzw. Anlagenteile, von der zulässigen Temperatur am Gehäuse und von den Platzverhältnissen ab. Bereits mit Fasermaterial mit einer Schichtdicke von mindestens 25mm können gute Messresultate erzielt werden. Die Schichtdicke beträgt vorzugsweise ca. 50mm.

Wenn Fasermaterial verwendet wird, bei dem sich Einzelfasern lösen, bzw. das lose Fasern umfasst, so wird ein Hüllenmaterial mit einer genügend kleinen Filterfeinheit gewählt, so dass die losen Fasern im wesentlichen nicht aus der Hülle austreten können. Die bevorzugte Fasermatte aus Silikatfasern hat Faserlängen im Bereich von 30-70mm insbesondere im Wesentlichen von 50mm und Durchmesser im Bereich von 2mm bis 4mm. Diese Fasern werden sowohl von Glasfaserstoff als auch von einem Mikrofilter-Metallgewebe mit einer Filterfeinheit von 20mm vollständig zurückgehalten.

Die Aussenhaut des Isolierelementes liegt an der Gehäuseinnenfläche an, oder ist von dieser beabstandet. Bei Gehäusen bzw. Tragkonstruktionen, die vibrieren, können zwischen dem Gehäuse und einer an Gehäuseteilen anliegenden Aussenhaut des Isolierelementes Reibungsbewegungen auftreten. Damit die Hülle durch die Reibung nicht schnell beschädigt wird, umfasst zumindest die Aussenhaut eine reibungsaufnehmende Schicht, insbesondere ein textiles Material aus Draht oder eine Metallfolie.

Wenn ein Mikrofilter-Metallgewebe sowohl zum Zurückhalten des Isoliermaterials als auch als reibungsfeste Schicht eingesetzt wird, so muss es aus genügend hartem Draht gebildet werden. Weil reibungsfeste Mikrofilter-Metallgewebe sehr teuer sind, ist es auch möglich bei der Aussenhaut ein grobporiges reibungsfestes textiles Drahtmaterial mit einem nicht reibungsfesten aber feinporigen Drahtgewebe oder mit einem Stoff, insbesondere mit Glasfaserstoff, zu kombinieren. Die Reibung am Gehäuse wird vom aussen liegenden grobporigen Drahtmaterial übernommen. Das Zurückhalten des Isoliermaterials in der Hülle wird vom feinpori-gen Drahtmaterial oder vom Stoff gewährleistet.

Wenn die Aussenhaut eine Metallfolie umfasst, so kann diese sowohl die Fasern zurückhalten als auch gegebenenfalls die Reibung aufnehmen. Wenn als äusserste Lage der Aussenhaut ein robustes Drahtgewebe und als weitere Lage der Aussenhaut eine Metallfolie eingesetzt wird, so kann die Aussenhaut vom Drahtgewebe die Stabilität und von der Metallfolie die Dichtigkeit erhalten.

Die Innenhaut ist dem Innenraum mit der Hitzequelle und/oder der Schall- bzw. Vibrationsquelle zugewandt. Sie muss die Formstabilität des Isolierelementes gegen den Innenraum hin gewährleisten. Zudem muss sie eine gegebenenfalls nötige Hitzebeständigkeit aufweisen. Sie soll so weit wie möglich zur Hitze- und/oder Schalldämmung beitragen.

Die Formstabilität eines Isolierelementes wird durch den Aufbau der Innenhaut, der Aussenhaut und das Zusammenwirken von Hülle, Isoliermaterial und Befestigung beeinflusst. Die Isolierelemente sollen auch an nach unten gerichteten Gehäuseinnenflächen montiert werden können. Dabei soll die Form und somit die Isolationseigenschaft im Wesentlichen gleich sein, wie bei einer Montage an der Wand oder am Boden. Die gewichtsbedingte Verformung einer nach unten hängenden Innenhaut sollte so klein wie möglich sein und keine wesentliche Verformung der Verbindungsflächen bewirken.

Bei einer bevorzugten Ausführungsform umfasst die Aussenhaut eine Metallfolie und nach aussen daran anschliessend ein Drahtgewebe. Die Innenhaut und die Verbindungsflächen umfassen eine Lage aus Glasfaserstoff und eine Lage aus Drahtgewebe, wobei der Glasfaserstoff innen an das Isoliermaterial anschliessend angeordnet ist. Der Glasfaserstoff kann beim Übergang von den Verbindungsflächen zur Aussenhaut am Drahtgewebe der Verbindungsflächen befestigt sein. Nach dem Ausbilden einer Schweissverbindung zwischen dem Drahtgewebe der Aussenhaut und dem Drahtgewebe der Verbindungsflächen ist die Hülle im Wesentlichen dicht.

Die Verbindung der Befestigungselemente zum Gehäuse erfolgt über Verbindungselemente die einerseits am Gehäuse und andererseits am Befestigungselement festsitzen. Vorzugsweise werden als Verbindungselemente Schrauben von aussen durch Bohrungen im Gehäuse gesteckt und an einem mit dem Befestigungselement verbundenen Gewinde festgeschraubt. Damit bei der Montage die Befestigungselemente mit den Gewinden an den gewünschten Positionen im Isolierelement angeordnet sind, werden sie an der Aussenhaut befestigt.

Als grobes Drahtgewebe wird bevorzugt ein Drahtge-webe mit weniger als 400, insbesondere mit im Wesentlichen 130 Maschen/cm² (mesh/ cm²) und einer offenen Fläche im Bereich von 40-55%, beispielsweise von ca. 51 % eingesetzt. Das Gewicht dieses Drahtgewebes beträgt ca. 0.910kg/m 2 bei einem Drahtdurchmesser von ca. 0.25mm. Der Drahtdurchmesser soll mindestens 0.1 mm, gegebenenfalls mindestens 0.2mm insbesondere im Wesentlichen 0.25mm betragen. Es hat sich gezeigt, dass dieses grobe Drahtgewebe eine gute Schallabsorption im tiefen Frequenzbereich erzielbar macht. Zudem kann das Drahtgewebe durch die Wahl eines geeigneten Drahtmateriales reibungsfest ausgebildet und als Reibungsschicht, die am Bauteil anliegt, eingesetzt werden.

Wenn sich Drahtgewebe von der Innenhaut und von der Aussenhaut entlang der Verbindungsflächen erstreckt, so kann die Innen- und die Aussenhaut mit dazwischen liegendem Isoliermaterial so ineinander gefügt werden, dass sich die vorstehenden Drahtgewebebereiche bei den Verbindungsflächen überlappen und dort eine Schweissverbindung ausgebildet werden kann. Dabei liegen die Schweissverbindungen in einem nach der Montage nicht sichtbaren Bereich.

Die Zeichnungen erläutern die erfindungsgemässe Isolierung anhand eines Ausführungsbeispieles. Dabei zeigt

Fig. 1 eine perspektivische Darstellung einer Gehäusefläche mit einem daran montierten Isolierelement bei dem eine Ecke aufgeschnitten dargestellt ist,
Fig. 2 einen Schnitt durch ein montiertes Isolierelement,
Fig. 3 einen vergrösserten Ausschnitt aus einem Schnitt durch ein montiertes Isolierelement, und
Fig. 4 einen Schnitt durch ein Isolierelement, das in einem Abstand von der Gehäusefläche gehalten ist.

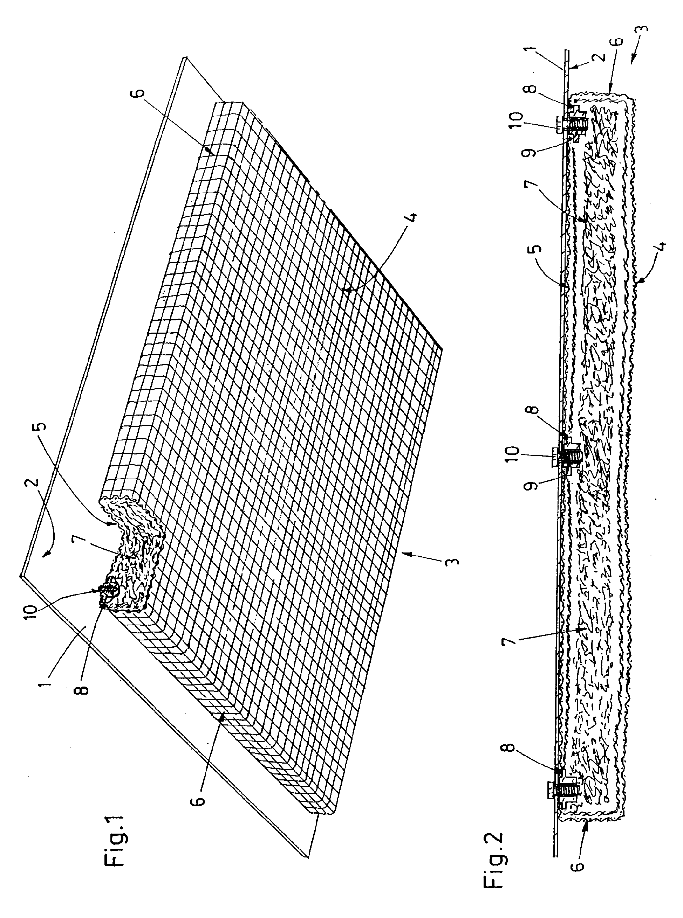

Die Figuren 1 bis 4 zeigen Isolierelemente 3, die an einem Blech 1 montiert sind. Das Blech 1 ist ein Teil eines Gehäuses, das eine Hitze- und/oder Schallquelle zumindest teilweise umschliesst. Das Isolierelement 3 ist an der der Hitze- und/oder Schallquelle zugewandten Gehäuseinnenfläche 2 befestigt. Um eine Isolierung der gesamten Gehäuseinnenfläche 2 bereitzustellen, werden direkt aneinander anschliessend Isolierelemente 3 angeordnet. Das Isolierelement 3 umfasst eine Hülle, die eine Innenhaut 4, eine Aussenhaut 5 sowie diese verbindende Verbindungsflächen 6 umfasst. In der Hülle ist Isoliermaterial 7 angeordnet. Die Aussenhaut 5 ist im montierten Zustand der Gehäuseinnenfläche 2 zugewandt und die Innenhaut 4 ist von dieser abgewandt bzw. gegen den Gehäuseinnenraum gerichtet.

In der Hülle sind an die Aussenhaut 5 anschliessend Befestigungselemente 8 angeordnet. Die Befestigungselemente 8 umfassen Festsetzeinrichtungen 9, vorzugsweise Innengewinde, zum Befestigen von Verbindungselementen 10, wobei die Befestigungselemente 8 mit den Verbindungselementen 10 an der Gehäuseinnenfläche 2 montiert werden.

Die Befestigungselemente 8 bestehen aus einem Vorstehteil 16 mit einer Anschlagfläche 17 und einem Innenteil 18, der im Innern des Isolierelementes 3 aufgenommen ist. Die Anschlagfläche 17 eines Befestigungselementes 8 steht durch eine Durchtrittsöffnung 5a soweit über die Aussenhaut 5 des Isolierelementes 3 vor, dass nach dem Montieren des Isolierelementes 3 am Gehäuseteil 1 die gesamte Anpresskraft zwischen dem Gehäuseteil 1 und der Anschlagfläche 17 wirkt. Dadurch kann ein Festklemmen der Aussenhaut ausgeschlossen werden. Der Innenteil 18 des Befestigungselementes 8 liegt mit einem Haltebereich 19 innen an der Aussenhaut 5 an. Zum Montieren umfasst das Befestigungselement 8 mindestens eine Bohrung 8a, die von der Anschlagsfläche 17 ins Befestigungselement 8 führt und an welcher ein vom Gehäuseteil 1 vorstehendes Verbindungselement 10 festgesetzt werden kann.

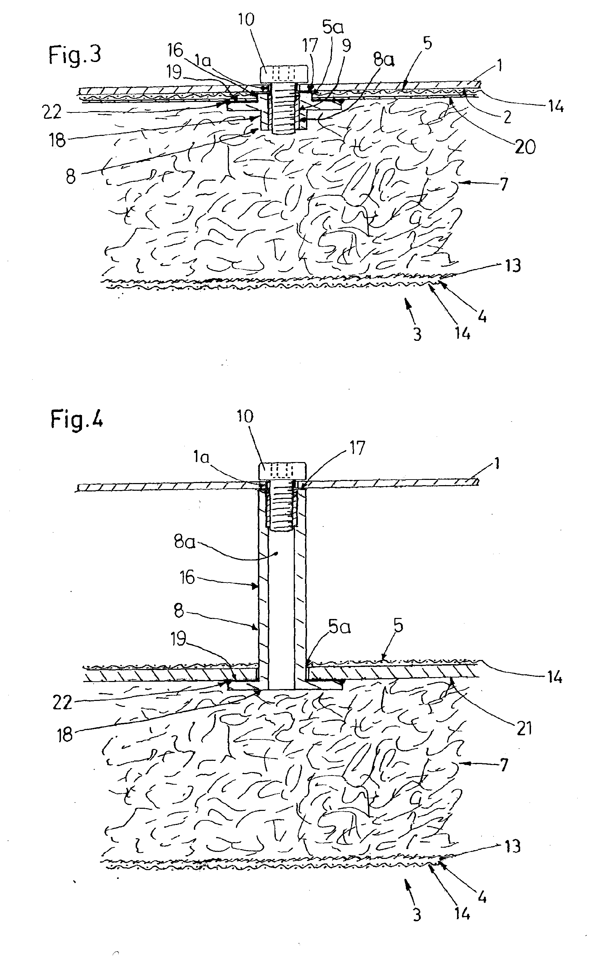

Bei Isolierelementen 3 mit einer Aussenhaut 5, die mindestens eine Lage aus metallischem Material umfasst, werden die Befestigungselemente 8 an diesem metallischen Material fest geschweisst. In der Ausführungsform gemäss Fig. 1 ist die gesamte Hülle aus einem Drahtgewebe gebildet und die Befestigungselemente sind daher an diesem Drahtgewebe fest geschweisst. In der Ausführungsform gemäss Fig. 2 ist die Hülle aus zwei Lagen zusammengestellt. Aussen ist ein Drahtgewebe und innen ein Glasfaserstoff. Bei der Ausführungsform gemäss Fig. 3 sind die Innenhaut 4 und die Verbindungsflächen 6 aus einem Glasfasergewebe 13 und einem Drahtgewebe 14 aufgebaut. Die Aussenhaut 5 umfasst aussen das Drahtgewebe 14 und innen eine Metallfolie 20.

Die Isolierelemente gemäss Fig. 4 sind ähnlich aufgebaut wie jene gemäss Fig. 3, wobei die Vorstehteile 16 länger ausgebildet sind und die Anschlagflächen 17 entsprechend der gewünschten Weite eines Freiraumes über die Aussenhaut 5 vorstehen. Anstelle der Metallfolie 20 ist ein Blech 21 eingesetzt, das dem Isolierelement 3 die nötige Stabilität gibt. Gegebenenfalls wird zwischen dem Drahtgewebe 14 und dem Blech 21 auch noch eine Metallfolie eingesetzt. Das Blech 21 erstreckt sich vorzugsweise nicht ganz bis zu den Verbindungsflächen. Damit kann verhindert werden, dass die Aussenkanten des Bleches 21 Bei starken Vibrationen die Hülle zerstören.

Die Befestigungselemente 8 werden über Schweissverbindungen 22 mit einer metallischen Lage verbunden. Die metallische Lage ist wie oben beschrieben als Metallfolie, Metallblech oder Drahtgewebe ausgebildet und umfasst bei den Befestigungselementen 8 Durchtrittsöffnungen 5a. Die Befestigungselemente werden beim Haltebereich 19 mit der metallischen Lage der Aussenhaut 5 verbunden. Es kann für jedes Verbindungselement 10 ein kleines Befestigungselement 8 festgesetzt werden. Durch die genaue Anordnung der Durchtrittsöffnungen 5a ist auch eine genaue Anordnung der daran festgesetzten Befestigungselemente 8 gewährleistet.

Das in Fig. 1 dargestellte Isolierelement ist in der Draufsicht rechteckig und hat eine Länge im Bereich von 600mm bis 1600mm, vorzugsweise von im Wesentlichen 1000mm, und eine Breite im Bereich von 400mm bis 1200mm, vorzugsweise von im Wesentlichen 600mm. Entlang von parallelen Linien sind Befestigungselementen 8 angeordnet.

Die Befestigungselemente 8 sind aus Metall und vorzugsweise bezüglich einer Achse rotationssymmetrisch. Die Festsetzeinrichtungen 9 können in der zentralen Bohrung 8a in der Form von Innengewinden bereitgestellt werden, wenn die Verbindungselemente 10 Schrauben sind. Die Verbindungselemente 10 sind Schrauben, die durch Bohrungen 1a im Gehäuse bzw. durch das Blech 1 in die Gewinde eingeschraubt werden können. Bei Anwendungen ohne starke Vibrationen könnten auch einrastende (formschlüssige) oder klemmende (reibungsschlüssige) Festsetzeinrichtungen eingesetzt werden. Dabei wäre es auch möglich, dass von der Gehäuseinnenfläche 2 Bolzen vorstehen, an welche die Isolierelemente festgesteckt werden könnten, indem die Bolzen in entsprechende Festsetzeinrichtungen gelangen.

Die Festsetzeinrichtungen 9 zum Befestigen von Verbindungselementen 10 sind von der Innenhaut 4 beabstandet, so dass sich eingesetzte Verbindungselemente 10 nicht bis zur Innenhaut 4 erstrecken. Dadurch können Wärmebrücken und entsprechen auch das Entstehen von hot spots verhindert werden.

## Patentansprüche

1. Isolierung zum Anbringen an Gehäuseteilen (2), zusammengestellt aus Isolierelementen (3) mit einer Hülle, die eine Innenhaut (4), eine Aussenhaut (5) sowie diese verbindende Verbindungsflächen (6) umfasst, und mit in der Hülle angeordnetem Isoliermaterial (7), wobei die Aussenhaut (5) im montierten Zustand den Gehäuseteilen (2) zugewandt und die Innenhaut (4) von diesen abgewandt ist, in der Hülle an die Aussenhaut (5) anschliessend Innenteile (18) von Befestigungselementen (8, 8a) angeordnet sind und die Befestigungselemente (8) mit Verbindungselementen (10) an den Gehäuseteilen (2) montiert werden können, **da-durch gekennzeich-net, dass** die Befestigungselemente (8) einen Vorstehteil (16) mit einer Anschlagfläche (17) und einen Innenteil (18) mit einem Haltebereich (19) umfassen, wobei die Anschlagflächen (17) der Befestigungselemente (8) durch Durchtrittsöffnungen (5a) über die Aussenhaut (5) des Isolierelementes (3) vorstehen, im montierten Zustand die Anpresskraft zwischen dem Gehäuseteil (1) und den Anschlagflächen (17) wirkt und die Haltebereiche (19) innen an die Aussenhaut (5) anliegen.

2. Isolierung nach Anspruch 1, **dadurch gekennzeichnet, dass** die Aussenhaut (5) mindestens eine Lage aus metallischem Material umfasst, die Befestigungselemente (8) aus Metall hergestellt sind und zwischen dem metallischen Material der Aussenhaut (5) und den Haltebereichen (19) der Befestigungselemente (8) Schweissverbindungen 22) ausgebildet sind.

3. Isolierung nach Anspruch 1 oder 2, **dadurch gekennzeichnet, dass** eine Metallfolie (20) oder gegebenenfalls ein Blech (21) das metallische Material der Aussenhaut (5) bildet.

4. Isolierung nach einem der Ansprüche 1 bis 3, **dadurch gekennzeichnet, dass** die Isolierelemente (3) in der Draufsicht rechteckig sind, insbesondere mit einer Länge im Bereich von 600mm bis 1600mm, vorzugsweise von im Wesentlichen 1000mm, und einer Breite im Bereich von 400mm bis 1200mm, vorzugsweise von im Wesentlichen 600mm, wobei entlang von mindestens zwei parallelen Linien Befestigungselementen (8) angeordnet sind.

5. Isolierung nach einem der Ansprüche 1 bis 4, **dadurch gekennzeichnet, dass** die Befestigungselemente (8) von der Innenhaut (4) beabstandet sind.

6. Isolierung nach einem der Ansprüche 1 bis 5, da-durch **gekennzeichnet**, **dass** in den Befestigungselementen (8) Innengewinde als Festsetzeinrichtungen (9) ausgebildet sind und die Verbindungselemente (10) in der Form von Schrauben durch Bohrungen (1a) im Gehäuse in die Innengewinde eingeschraubt werden können.

7. Isolierung nach einem der Ansprüche 1 bis 6, da-durch **gekennzeichnet**, **dass** die Innenhaut (4) und die Verbindungsflächen (6) mindestens ein textiles Flachmaterial umfassen, vorzugsweise ein Glasfasergewebe (13).

8. Isolierung nach einem der Ansprüche 1 bis 7, **dadurch gekennzeichnet, dass** die Aussenseite der Aussenhaut (5) und der Innenhaut (4) sowie der Verbindungsflächen (6) von einem aus Draht hergestellten Flachmaterial, vorzugsweise einem groben Drahtgewebe (14), gebildet wird.

9. Isolierung nach einem der Ansprüche 1 bis 7, **dadurch gekennzeichnet, dass** das Isoliermaterial (7) aus langfasrigen Glas- oder Keramikfasern, vorzugsweise aber aus Silikatfasern besteht und gegebenenfalls schüttgutförmig eingefüllt, insbesondere aber in der Form von Fasermatten-Zuschnitten eingesetzt ist, wobei die Fasermatte vorzugsweise eine Dicke von mindestens 25mm, insbesondere von im Wesentlichen 50mm hat und die Länge der Fasern insbesondere grösser als 2cm, vorzugsweise im Wesentlichen 5cm ist.
